# EUROPÄISCHE PATENTSCHRIFT

(11) **EP 3 155 243 B1**
(45) Veröffentlichungstag und Bekanntmachung des Hinweises auf die Patenterteilung: **10.04.2019**
(21) Anmeldenummer: 15724603.4
(22) Anmeldetag: 20.05.2015
(51) Int. Cl.: F01N 3/20, F01N 13/00, F01N 3/28

(54) **VORRICHTUNG ZUR KATALYTISCHEN CHEMISCHEN UMSETZUNG WENIGSTENS EINER KOMPONENTE EINES GASSTROMS UND ABGASANLAGE FÜR EINE BRENNKRAFTMASCHINE**
APPARATUS FOR CHEMICAL AND CATALYTIC CONVERSION OF AT LEAST ONE COMPONENT OF AN EXHAUST GAS AND EXHAUST GAS SYSTEM FOR AN INTERNAL COMBUSTION ENGINE
INSTALLATION POUR LA CONVERSION CHIMIQUE ET CATALYTIQUE D'AU MOINS UNE COMPOSANTE DE GAZ D'ECHAPPEMENT ET SYSTÈME D'ÉCHAPPEMENT DE MOTEUR À COMBUSTION INTERNE

(30) Priorität: 11.06.2014 DE 102014211159
(43) Veröffentlichungstag der Anmeldung: 19.04.2017
(73) Patentinhaber: Volkswagen Aktiengesellschaft, 38440 Wolfsburg (DE)
(72) Erfinder: CAR, Onur Ulas, 13581 Berlin (DE); PIRITZ, Frank, 38112 Braunschweig (DE)
(86) Internationale Anmeldenummer: PCT/EP2015/061050
(87) Internationale Veröffentlichungsnummer: WO 2015/189011

(56) Entgegenhaltungen:
- WO-A1-2012/110720
- DE-A1- 3 823 550
- DE-U1- 9 313 593
- DE-U1- 9 313 593
- FR-A3- 2 938 006
- US-A- 3 163 256
- US-A- 5 330 728
- US-B1- 6 713 025

## Beschreibung

Die Erfindung betrifft eine Vorrichtung zur katalytischen chemischen Umsetzung wenigstens einer Komponente eines Gasstroms mit den Merkmalen gemäß dem Oberbegriff des Anspruchs 1. Sie betrifft des Weiteren eine Abgasanlage für eine Brennkraftmaschine mit den Merkmalen gemäß dem Oberbegriff des Anspruchs 5.

In der Verfahrenstechnik zur Reinigung eines Gasstroms ist es besonders wirkungsvoll, das zu reinigende Gas mit einer Oberfläche zur katalytischen chemischen Umsetzung wenigstens einer Komponente des Gasstroms in Kontakt zu bringen. Konkret für die Reinigung von Abgasen einer Brennkraftmaschine gelangen in einer der Brennkraftmaschine nachgelagerten Abgasanlage katalytisch aktive Oberflächen von Substraten zum Einsatz. Für eine effektive Behandlung des Abgases ist ein bestimmtes Substratvolumen in der Abgasanlage notwendig. In der Praxis ist es eine große Herausforderung, das erforderliche Substratvolumen in einem nur begrenzt zur Verfügung stehenden Bauraum unterzubringen. Dabei ist sicherzustellen, dass die Substrate dem Gasstrom nur einen möglichst geringen Gegendruck entgegensetzen, während sie gleichzeitig möglichst gleichmäßig angeströmt werden, um die effektive Fläche möglichst umfassend zu nutzen.

Es gelten im Allgemeinen unter anderem die folgenden Betrachtungen für die Nutzung des Bauraums: Bei einer Verkleinerung des Substratvolumens beziehungsweise einer ungleichmäßigen Verteilung der Anströmung kann es zu einer Verminderung der Umsetzungsleistung und/oder zu einer Gegendruckerhöhung kommen. Durch Verkleinern des Querschnitts bei gleichzeitiger Verlängerung des Substrates können die Substratvolumina gleichgehalten werden. Eine gleichmäßige Anströmung kann durch die Reduzierung des Substratvolumens oder durch eine Verkleinerung der Anströmfläche erreicht werden. Die Gleichverteilung der Anströmung kann durch den Einsatz von Leitblechen oder strömungsoptimierten Eingangstrichtern zum Substrat verbessert werden.

Im Dokument DE 10 2011 111 590 A1 ist eine Abgasbehandlungseinrichtung in einem Abgasstrang eines Brennkraftmaschine beschrieben. Die Brennkraftmaschine ist selbstzündend, kann mittels eines Abgasturboladers aufgeladen werden und hat eine Abgasrückführung. Die motornah angeordnete Abgasbehandlungseinrichtung weist - in einem U-förmigen Abschnitt einer Fluidleitung angeordnet - einen Oxidationskatalysator, ein Dosiermodul für ein Reduktionsmittel für Stickstoffoxide (NOₓ) und einen Partikelfilter mit einer reduktionskatalytisch aktiven Oberfläche auf. Das Abgas gelang in diesen Abschnitt stromab einer Turbine des Abgasturboladers über eine flanschförmige Anschlusseinrichtung.

In Varianten der in diesem Dokument gezeigten Ausführungsform ist die flanschförmige Anschlusseinrichtung aufgrund einer bestimmten Nutzung des zur Verfügung stehenden Bauraums nicht genau senkrecht zur Verlaufsrichtung des Abschnitts der Fluidleitung angeordnet. Bei einer derartigen Lösung besteht die Befürchtung eines erhöhten Abgasgegendrucks.

Aus dem Dokument DE 10 2010 039 121 A1 ist ein Abgasnachbehandlungssystem zum Nachbehandeln von Abgas einer Brennkraftmaschine mit einem ersten und einem zweiten Katalysator sowie einem seitlich angeordneten Dosierventil zum Einbringen eines Abgasnachbehandlungsmittels zwischen den ersten und den zweiten Katalysator bekannt. Die abströmseitige Stirnfläche des ersten Katalysators und die anströmseitige Stirnfläche des zweiten Katalysators sind zumindest bereichsweise schräg zur Durchströmungsrichtung ausgerichtet. Zusätzlich kann auch die anströmseitige Stirnfläche des ersten Katalysators schräg zur Durchströmungsrichtung ausgerichtet sein, damit die Kanäle des ersten Katalysators im Wesentlichen gleichlang sind und folglich dieselbe Verweilzeit des Abgases aufweisen. Im Dokument DE 10 2010 039 121 A1 wird angegeben, dass auf diese Weise auch ohne ein zusätzliches Mischelement eine ausreichende Gleichverteilung des Abgasnachbehandlungsmittels erreicht wird, um hohe Umsatzraten am zweiten Katalysator zu gewährleisten.

Im Dokument DE 38 23 550 A1 wird eine Fahrzeug-Abgasanlage beschrieben, die einen vergrößerten Katalysator bei kompakter Bauweise unterbringt. Der Katalysator wird so angeordnet, dass die Eintrittsstirnfläche mit einem Winkel ungleich 90° angeströmt wird. Durch diese Anordnung kann die Eintrittsstirnfläche vergrößert werden und der Abgasgegendruck der Anlage sinkt.

In dem Dokument DE 93 13 593 U1 wird dazu sehr ähnlich ein gasdurchlässiger Katalysatorkörper beschrieben. Dieser umfasst einen Einlass und einen Auslass an den jeweiligen Stirnflächen. In Anströmrichtung und Ausströmrichtung sind die Stirnflächen so angewinkelt, dass die einströmenden und ausströmenden Gase in einem Winkel kleiner als 90° zur generellen Abgasrichtung ausströmen und einströmen.

Durch das Dokument US 5,330,728 A1 wird ein katalytischer Umwandler in einer Box beschrieben. Das Substrat hat dabei in der Box die Form einer angewinkelten Box oder eines abgeschrägten Prismas. Das Substrat ist so angeordnet, dass die Einlassfläche des Substrats in einem Winkel kleiner als 90° von dem Abgasstrom beaufschlagt wird. Durch die Anordnung kann die Einlassfläche vergrößert werden und dabei eine kompakte Bauweise der Abgasnachbehandlung realisiert werden.

Aus dem Dokument FR 2 938 006 A3 sind poröse Strukturen in einer Vorrichtung zur Reinigung von Abgasen einer Brennkraftmaschine eines Automobils bekannt. Diese porösen Strukturen verfügen über eine stufenlos angeschrägte oder abgestufte Fläche, auf der das Abgas in die porösen Strukturen eintritt. Die Abstufung oder der Gradient sind dabei auf den Eintrittswinkel des Abgases abgestimmt und sorgen für eine gute Verteilung des Abgases in der porösen Struktur.

Das Dokument WO 2012/110720 A1 beschreibt eine Abgasanlage für eine Dieselbrennkraftmaschine, die U-förmig ausgebildet ist und unter der Motorhaube eines Kraftfahrzeuges montiert ist. Dabei umfasst die U-förmige Abgasanlage im Abgasstrom aufeinander folgend einen Turbokompressor, einen Oxidationskatalysator, eine Verbindung zwischen dem Oxidationskatalysator und einen Katalysator mit SCR-Funktionalität.

Aus dem Dokument US 6,713,025 B1 ist eine angewinkelte oder abgestufte Eintrittsfläche eines Hauptblockkatalysators bekannt. Die Eintrittsfläche ist an die Anströmung durch Abgas aus mehreren konisch geformten und nah gekoppelten Katalysatoren angepasst. Die Austrittsfläche des Hauptblockkatalysators ist konisch geformt. Durch diese Formen des Hauptblockkatalysators wird eine gute Anströmung gewährleistet und ein Abgasgegendruck verringert.

Aufgabe der vorliegenden Erfindung ist es, eine Vorrichtung zur katalytischen chemischen Umsetzung mit einem Substrat zu schaffen, das dem Gasstrom nur einen möglichst geringen Gegendruck entgegensetzt.

Diese Aufgabe wird erfindungsgemäß durch eine Vorrichtung zur katalytischen chemischen Umsetzung wenigstens einer (chemischen) Komponente eines Gasstroms mit den Merkmalen gemäß Anspruch 1 gelöst. Vorteilhafte Weiterbildungen der Erfindung sind in den abhängigen Ansprüchen charakterisiert.

Eine erfindungsgemäße Vorrichtung zur katalytischen chemischen Umsetzung wenigstens einer (chemischen) Komponente eines Gasstroms umfasst eine Fluidleitung, durch welche das Gas strömt, und ein in einem sich in eine Verlaufsrichtung erstreckenden Abschnitt der Fluidleitung angeordneten Substrat, das eine (anströmseitige) Stirnfläche und eine katalytisch aktive Oberfläche aufweist. Das Gas strömt, insbesondere aus einem vorgelagerten Abschnitt der Fluidleitung, in welcher eine Turbine eines Abgasturboladers angeordnet sein kann, in den Abschnitt der Fluidleitung in einer Einströmungsrichtung unter einem Winkel verschieden von Null zur Verlaufsrichtung ein. Nach Eintritt in das Substrat durch die Stirnfläche durchströmt das Gas das Substrat und tritt mit der katalytisch aktiven Oberfläche zur chemischen Umsetzung der wenigstens einen (chemischen) Komponente in Kontakt. Dabei ist die Normalrichtung der Stirnfläche des Substrats unter einem Winkel verschieden von Null zur Verlaufsrichtung des Abschnitts der Fluidleitung orientiert ist. Die Fluidleitung ist im Wesentlichen U-förmig. Stromab des Abschnitts, in welchem das Substrat angeordnet ist, schließt nach einer ersten Biegung der Fluidleitung ein Bereich an, in welchem mittels einer Einspritzvorrichtung Reduktionsmittel in die Fluidleitung einbringbar ist. Stromab einer weiteren Biegung der Fluidleitung liegt ein Abschnitt der Fluidleitung, in welchem ein Partikelfilter mit einer katalytischen Oberfläche zur Reduktion von Stickstoffoxiden angeordnet ist. Stromauf des Substrats ist ein Stockstoffoxidsensor (NOₓ-Sensor) in der Fluidleitung angeordnet.

Kurz gesagt, die schräg in der Fluidleitung orientierte anströmseitige Stirnfläche des Substrats wird erfindungsgemäß schräg vom Gasstrom angeströmt. Aufgrund der schiefen Anordnung kann der zur Verfügung stehende Bauraum möglichst effektiv genutzt werden und das Substrat wird zusätzlich gleichmäßig angeströmt, so dass die katalytische chemische Umsetzung verbessert wird. Die erfindungsgemäß zum Einsatz gelangende Substratgeometrie ist einfach und kostengünstig herstellbar. In besonders vorteilhafter Konsequenz wird der dem Gasstrom entgegenwirkende Gegendruck im Vergleich zur geraden Anordnung verringert.

Unter einem Substrat wird insbesondere der Trägerkörper für eine katalytisch aktive Oberfläche verstanden. Geläufig werden Substrate daher auch als Katalysatoren bezeichnet. Die katalytisch aktive Oberfläche kann aus einer oder mehreren Beschichtungen bestehen. Unter Orientierung wird auch die Ausrichtung oder die Lage im Raum verstanden. Insbesondere ist die katalytisch aktive Oberfläche eine in dem Substrat liegende Oberfläche (innere Oberfläche). Das Substrat kann eine Vielzahl von sich von der anströmseitigen Stirnfläche zu einer abströmseitigen Stirnfläche erstreckenden Kanälen aufweisen. Die Kanäle eines Substrats können durchgehend offen (Durchflusssubstrat) oder an einer Seite geschlossen (Wandstromsubstrat) sein. Das Gas kann auch ein Aerosol sein, wobei feste Partikel auch als chemische Komponenten des Gases angesehen werden.

Konkret kann in der erfindungsgemäße Vorrichtung zur katalytischen chemischen Umsetzung wenigstens einer Komponente eines Gasstroms der Winkel zwischen der Normalrichtung und der Verlaufsrichtung kleiner als der oder (bevorzugt) gleich dem Winkel zwischen der Einströmungsrichtung und der Verlaufsrichtung sein. Dabei ist die Summe der Winkel zwischen der Einströmungsrichtung und der Normalrichtung und zwischen der Normalrichtung und der Verlaufsrichtung im Wesentlichen, bevorzugt genau gleich dem Winkel zwischen der Einströmungsrichtung und der Verlaufsrichtung. Der Winkel zwischen der Einströmungsrichtung und der Normalrichtung ist bevorzugt Null. Auf diese Weise wird die Schräglage des Substrats zur Schräglage der Einströmungsrichtung derart ausgerichtet, dass sich die relative Schräglage des Substrats zur Einströmungsrichtung verringert. Diese erfindungsgemäße Maßnahme senkt den Gegendruck deutlich. Des Weiteren kann eine bessere Verteilung, bevorzugt eine Gleichverteilung, der Anströmung des Substrats erreicht werden.

In bevorzugten Ausführungsformen der erfindungsgemäßen Vorrichtung ist die katalytisch aktive Oberfläche eine oxidationskatalytische Oberfläche. Insbesondere handelt es sich um die in Strömungsrichtung des Gases erste sich in der Fluidleitung befindende katalytisch aktive Oberfläche einer Mehrzahl von katalytisch aktiven Oberflächen. Auf die erfindungsgemäße Weise der Orientierung der anströmseitigen Stirnfläche des Substrats wird die Anströmung der gesamten Vorrichtung zur katalytischen chemischen Umsetzung verbessert.

Die Geometrie des Substrats kann dem Bauraum angepasst ausgeführt sein. Die Geometrie der Außenflächen des Substrats - auch als Raumkörper bezeichnet - kann durch eine Hüllkontur beschrieben werden. Besonders zweckmäßig sind Substrate mit Raumkörpern, welche sich anhand einer Verschiebung einer zweidimensionalen ebenen, insbesondere einfach-zusammenhängenden Fläche entlang eines Geradestücks, welches in einer nicht in der Fläche verlaufenden Richtung orientiert ist, ergeben. Die Verschiebung kann insbesondere nicht senkrecht zur zweidimensionalen ebenen Fläche sein. Die Fläche wird durch eine ebene, geschlossene Kurve begrenzt. Die Kurve ist bevorzugt ein Kreis, eine Ellipse oder ein Mehreck, wie beispielsweise ein Dreieck oder Viereck. Derartige Raumkörper sind besonders vorteilhaft, da dann die das Substrat durchziehenden Kanäle im Wesentlichen gleichlang sind. Alternativ dazu kann aber auch ein Raumkörper zum Einsatz gelangen, der zueinander unterschiedliche Stirnflächen aufweist, beispielsweise ein an einer oder an beiden Seiten schräg abgeschnittener gerader Kreiszylinder oder ein an einer oder an beiden Seiten schräg abgeschnittenes gerades Dreiecksprisma. In bevorzugten Ausführungsformen der erfindungsgemäßen Vorrichtung zur katalytischen chemischen Umsetzung wenigstens einer Komponente eines Gasstroms ist die Hüllkontur des Substrats ein schiefer Kreiszylinder oder ein wenigstens an einer Stirnfläche schräg abgeschnittener Kreiszylinder.

Im Zusammenhang der Erfindung wird eine Abgasanlage für eine Brennkraftmaschine mit einer Abgasreinigungsvorrichtung geschaffen. Erfindungsgemäß weist diese eine Vorrichtung zur katalytischen chemischen Umsetzung wenigstens einer Komponente eines Gasstroms mit einem oder mehreren Merkmalen gemäß dieser Darstellung auf.

In der erfindungsgemäße Abgasanlage ist das Substrat eine in Strömungsrichtung des Gasstromes erste Vorrichtungskomponente einer Abgasreinigungsvorrichtung. Des weiteren weist die Abgasreinigungsvorrichtung stromab des Substrats wenigstens eine weitere Vorrichtungskomponente zur katalytischen chemischen Umsetzung von Stickstoffoxiden (NOₓ) im Gasstrom auf. Konkret weist die Abgasreinigungsvorrichtung der erfindungsgemäßen Abgasanlage eine Einspritzvorrichtung für ein Reduktionsmittel, einen Partikelfilter und eine katalytisch aktive Oberfläche zur Reduktion von Stickstoffoxiden (NOₓ) im Gasstrom zu Stickstoff (N₂) auf. Mit anderen Worten, ist die Abgasreinigungsvorrichtung zur Durchführung einer selektiven katalytischen Reaktion von Stickstoffoxiden ausgelegt (SCR-Abgasreinigungsvorrichtung). Das Reduktionsmittel kann beispielweise Ammoniak (NH₃), Harnstoff oder ein Ammoniakvorläufer sein. Das Reduktionsmittel kann in einer wässrigen Lösung vorliegen.

Des Weiteren können in der erfindungsgemäßen Abgasanlage stromauf des Substrats in der Fluidleitung ein Temperatursensor und/oder ein Lambdasensor angeordnet sein. In einer alternativen Ausführung kann ein Temperatursensor und/oder ein Lambdasensor und/oder ein Stickstoffoxidsensor (NOₓ-Sensor) direkt in das Substrat eingesteckt oder integriert sein.

Im Zusammenhang der Erfindung steht auch eine Brennkraftmaschine mit einer Abgasanlage mit einem oder mehreren Merkmalen gemäß dieser Darstellung. Die Brennkraftmaschine kann eine fremdgezündete oder (bevorzugt) eine selbstzündende Brennkraftmaschine sein. Vorteilhafte Ausführungsformen der Brennkraftmaschine können mittels einer oder mehrerer Ladevorrichtungen, zum Beispiel eines Abgasturboladers oder eines elektrisch angetriebenen Laders, aufgeladen werden und eine oder mehrere Abgasrückführungen, beispielsweise eine

Niederdruckabgasrückführung oder eine Hochdruckabgasrückführung, haben.
Die erfindungsgemäße Brennkraftmaschine kann Teil einer Antriebsmaschine eines Kraftfahrzeugs sein oder die Antriebsmaschine eines Kraftfahrzeugs darstellen. Ein erfindungsgemäßes Kraftfahrzeug umfasst eine erfindungsgemäße Brennkraftmaschine mit einem oder mehreren Merkmalen gemäß dieser Darstellung. Das Kraftfahrzeug ist insbesondere ein gleisloses Landkraftfahrzeug, bevorzugt ein Radkraftfahrzeug, zum Beispiel ein Personenkraftwagen oder ein Lastkraftwagen.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: die Topologie einer bevorzugten Ausführungsform einer erfindungsgemäßen Brennkraftmaschine, und
- Figur 2: die Geometrie einer Ausführungsform der erfindungsgemäßen Vorrichtung zur katalytischen chemischen Umsetzung wenigstens einer Komponente eines Gasstroms, für eine Abgasanlage eines Kraftfahrzeugs.

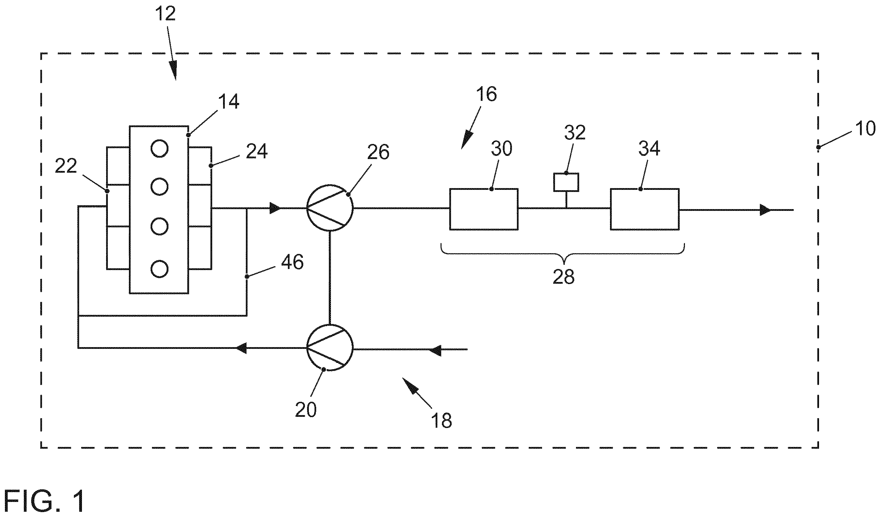

In der Figur 1 ist die Topologie einer bevorzugten Ausführungsform einer erfindungsgemäßen Brennkraftmaschine 12 als Antriebsmaschine in einem schematisch angedeuteten Kraftfahrzeug 10 dargestellt. Bevorzugt handelt es sich um eine selbstzündende Brennkraftmaschine. Dem Motor 14, bevorzugt Dieselmotor, der Brennkraftmaschine 12 wird durch eine Frischgasanlage 18 mit einem Verdichter 20 komprimiertes Frischgas über ein Saugrohr 22 zugeführt. Abgas des Motor 14 gelangt über einen Abgaskrümmer 24 in eine Abgasanlage 16 mit einer Turbine 26, welche den Verdichter 20 antreibt. Turbine 26 und Verdichter 20 bilden eine Aufladegruppe. Das dekomprimierte Abgas gelangt in eine Fluidleitung 28, in welcher sich ein Substrat 30 mit einer oxidationskatalytischen Oberfläche, eine Einspritzvorrichtung 32 mit einem Reduktionsmittel für Stickstoffoxide und einem Partikelfilter 34, welcher eine katalytisch aktive Oberfläche zur Reduktion von Stickstoffoxiden (NOₓ) im Gasstrom zu Stickstoff (N₂) aufweist. Die Brennkraftmaschine 12 hat des Weiteren eine Abgasrückführung 46 auf der Hochdruckseite der Aufladegruppe.

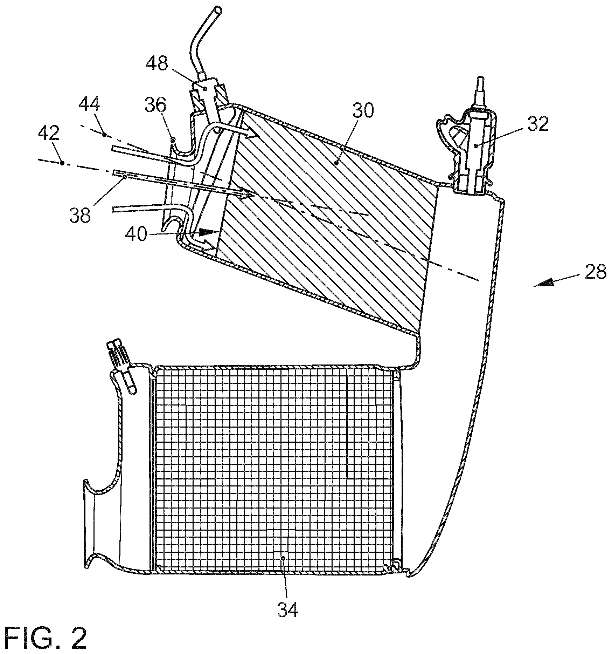

Die Figur 2 zeigt die Geometrie einer Ausführungsform der erfindungsgemäßen Vorrichtung zur katalytischen chemischen Umsetzung wenigstens einer Komponente eines Gasstroms, für eine Abgasanlage 16 der Brennkraftmaschine 12 eines Kraftfahrzeugs 10. Diese Geometrie ermöglicht eine motornahe Anordnung der Vorrichtung. Unter anderem hat eine motornahe Anordnung den Vorteil, dass die katalytisch aktiven Substanzen bereits durch die Abwärme der Brennkraftmaschine temperiert werden können.

Das Abgas der Brennkraftmaschine strömt über einen Eingangsanschluss 36 in die Fluidleitung 28 ein. Die Einströmungsrichtung 38 ist dabei nicht parallel zu der Verlaufsrichtung 44 der Fluidleitung 28, sondern es existiert ein von Null verschiedener Winkel zwischen der Einströmungsrichtung 38 und der Verlaufsrichtung 44. Das Substrat 30 weist eine Hüllkontur eines schiefen Kreiszylinders auf, so dass es in dieser Schnittansicht als ein Parallelogramm dargestellt ist. Der weitere Verlauf der Fluidleitung 28 ist U-förmig: An den Abschnitt der Fluidleitung 28, in welchem sich das Substrat 30 befindet, schließt sich nach einer Biegung ein Bereich an, in welchen mittels einer Einspritzvorrichtung 32 ein Reduktionsmittel eingebracht werden kann. Hinter einer weiteren Biegung der Fluidleitung 28 liegt ein Abschnitt, in welchem sich ein Partikelfilter 34 mit einer katalytisch aktiven Oberfläche zur Reduktion von Stickstoffoxiden (NOₓ) im Gasstrom zu Stickstoff (N₂) befindet. Vor dem Substrat 30 ist ein Stickstoffoxidsensor 48 in der Fluidleitung 28 angebracht.

Die Stirnfläche 40 des Substrats 30 ist eben und liegt schief zur Verlaufsrichtung 44 der Fluidleitung 28. Erfindungsgemäß ist die Stirnfläche 40 zum Eingangsanschluss 36 geneigt orientiert. Anders gesagt, der Winkel zwischen der Normalrichtung 42 der Stirnfläche und der Einströmungsrichtung 38 ist im Wesentlichen Null. Es ist besonders vorteilhaft, dass dadurch der dem Gasstrom entgegenwirkende Gegendruck im Vergleich zu einer Anordnung mit einem Substrat mit einer Hüllkontur eines geraden Kreiszylinders deutlich verringert wird.

### BEZUGSZEICHENLISTE

- 10: Kraftfahrzeug
- 12: Brennkraftmaschine
- 14: Motor
- 16: Abgasanlage
- 18: Frischgasanlage
- 20: Verdichter
- 22: Saugrohr
- 24: Abgaskrümmer
- 26: Turbine
- 28: Fluidleitung
- 30: Substrat
- 32: Einspritzvorrichtung
- 34: Partikelfilter
- 36: Eingangsanschluss
- 38: Einströmungsrichtung
- 40: Stirnfläche
- 42: Normalrichtung
- 44: Verlaufsrichtung
- 46: Abgasrückführung
- 48: Stickstoffoxidsensor

## Patentansprüche

1. Vorrichtung zur katalytischen chemischen Umsetzung wenigstens einer Komponente eines Gasstroms, mit einer Fluidleitung (28), durch welche das Gas strömt, und einem in einem sich in eine Verlaufsrichtung (44) erstreckenden Abschnitt der Fluidleitung (28) angeordneten Substrat (30), das eine Stirnfläche (40) und eine katalytisch aktive Oberfläche aufweist, wobei das Gas in den Abschnitt der Fluidleitung (28) in einer Einströmungsrichtung (38) unter einem Winkel verschieden von Null zur Verlaufsrichtung (44) einströmt, nach Eintritt in das Substrat (30) durch die Stirnfläche (40) das Substrat (30) durchströmt und mit der katalytisch aktiven Oberfläche zur chemischen Umsetzung der wenigstens einen Komponente in Kontakt tritt, wobei die Normalrichtung (42) der Stirnfläche (40) des Substrats (30) unter einem Winkel verschieden von Null zur Verlaufsrichtung (44) des Abschnitts der Fluidleitung (28) orientiert ist,
**dadurch gekennzeichnet,**
**dass** die Fluidleitung (28) im Wesentlichen U-förmig ist,
wobei stromab des Abschnitts der Fluidleitung (28), in welchem das Substrat (30) angeordnet ist, und nach einer ersten Biegung ein Bereich anschließt, in welchem mittels einer Einspritzvorrichtung (32) ein Reduktionsmittel in die Fluidleitung (28) einbringbar ist, und
wobei stromab einer weiteren Biegung der Fluidleitung (28) ein Abschnitt der Fluidleitung (28) liegt, in welchem ein Partikelfilter (34) mit einer katalytischen Oberfläche zur Reduktion von Stickstoffoxiden angeordnet ist, und
stromauf des Substrats (30) ein Stockstoffoxidsensor (48) in der Fluidleitung (28) angeordnet ist.

2. Vorrichtung zur katalytischen chemischen Umsetzung wenigstens einer Komponente eines Gasstroms gemäß Anspruch 1,
**dadurch gekennzeichnet,**
**dass** der Winkel zwischen der Normalrichtung (42) und der Verlaufsrichtung (44) kleiner als der oder gleich dem Winkel zwischen der Einströmungsrichtung (38) und der Verlaufsrichtung (44) ist, wobei die Summe der Winkel zwischen der Einströmungsrichtung (38) und der Normalrichtung (42) und zwischen der Normalrichtung(42) und der Verlaufsrichtung (44) im Wesentlichen gleich dem Winkel zwischen der Einströmungsrichtung (38) und der Verlaufsrichtung (44) ist.

3. Vorrichtung zur katalytischen chemischen Umsetzung wenigstens einer Komponente eines Gasstroms gemäß Anspruch 1,
**dadurch gekennzeichnet,**
**dass** die katalytisch aktive Oberfläche des Substrats (30) eine oxidationskatalytische Oberfläche ist.

4. Vorrichtung zur katalytischen chemischen Umsetzung wenigstens einer Komponente eines Gasstroms gemäß Anspruch 1,
**dadurch gekennzeichnet,**
**dass** eine Hüllkontur des Substrats (30) ein schiefer Kreiszylinder oder ein wenigstens an einer Stirnfläche schräg abgeschnittener Kreiszylinder ist.

5. Abgasanlage (16) für eine Brennkraftmaschine (12),
**dadurch gekennzeichnet,**
eine Vorrichtung zur katalytischen chemischen Umsetzung wenigstens einer Komponente eines Gasstroms gemäß Anspruch 1.

6. Abgasanlage (16) für eine Brennkraftmaschine (12) gemäß Anspruch 5,
**dadurch gekennzeichnet,**
**dass** stromauf des Substrats (30) in der Fluidleitung (28) ein Temperatursensor und/oder ein Lambdasensor angeordnet sind.

7. Brennkraftmaschine (12),
**gekennzeichnet durch**
eine Abgasanlage (16) gemäß Anspruch 5.

8. Kraftfahrzeug (10),
**gekennzeichnet durch**
eine Brennkraftmaschine (12) gemäß Anspruch 7.

## Claims

1. Apparatus for the catalytic chemical conversion of at least one component of a gas stream, having a fluid line (28) through which the gas flows, and having a substrate (30) which is arranged in a portion of the fluid line (28) extending in a profile direction (44), which substrate has an end surface (40) and a catalytically active surface, wherein the gas flows into the portion of the fluid line (28) in an inflow direction (38) at a non-zero angle relative to the profile direction (44), and, after entering the substrate (30) through the end surface (40), flows through the substrate (30) and comes into contact with the catalytically active surface for the chemical conversion of the at least one component, wherein the normal direction (42) of the end surface (40) of the substrate (30) is oriented at a non-zero angle relative to the profile direction (44) of the portion of the fluid line (28),
**characterized**
**in that** the fluid line (28) is substantially U-shaped,
wherein, downstream of that portion of the fluid line (28) in which the substrate (30) is arranged, and after a first bend, there follows a region in which a reducing agent can be introduced into the fluid line (28) by means of an injection apparatus (32), and
wherein, downstream of a further bend of the fluid line (28), there is situated a portion of the fluid line (28) in which a particle filter (34) with a catalytic surface for the reduction of nitrogen oxides is arranged, and
a nitrogen oxide sensor (48) is arranged in the fluid line (28) upstream of the substrate (30).

2. Apparatus for the catalytic chemical conversion of at least one component of a gas stream according to Claim 1,
**characterized**
**in that** the angle between the normal direction (42) and the profile direction (44) is less than or equal to the angle between the inflow direction (38) and the profile direction (44), wherein the sum of the angles between the inflow direction (38) and the normal direction (42) and between the normal direction (42) and the profile direction (44) is substantially equal to the angle between the inflow direction (38) and the profile direction (44).

3. Apparatus for the catalytic chemical conversion of at least one component of a gas stream according to Claim 1,
**characterized**
**in that** the catalytically active surface of the substrate (30) is an oxidation catalytic surface.

4. Apparatus for the catalytic chemical conversion of at least one component of a gas stream according to Claim 1,
**characterized**
**in that** envelope contour of the substrate (30) is an oblique circular cylinder or a circular cylinder which is truncated obliquely at least one end surface.

5. Exhaust system (16) for an internal combustion engine (12),
**characterized by**
an apparatus for the catalytic chemical conversion of at least one component of a gas stream according to Claim 1.

6. Exhaust system (16) for an internal combustion engine (12) according to Claim 5,
**characterized**
**in that** a temperature sensor and/or a lambda sensor is arranged in the fluid line (28) upstream of the substrate (30).

7. Internal combustion engine (12),
**characterized by**
an exhaust system (16) according to Claim 5.

8. Motor vehicle (10),
**characterized by**
an internal combustion engine (12) according to Claim 7.

## Revendications

1. Dispositif de conversion chimique catalytique d'au moins un composant d'un flux de gaz, comprenant une conduite de fluide (28) à travers laquelle le gaz s'écoule, et un substrat (30) disposé dans une partie, s'étendant dans une direction d'étendue (44), de la conduite de fluide (28), lequel substrat comprend une face frontale (40) et une surface à action catalytique, le gaz s'écoulant dans la partie de la conduite de fluide (28) dans un sens d'afflux (38) suivant un angle différent de zéro par rapport à la direction d'étendue (44), traversant le substrat (30) après l'entrée dans le substrat (30) à travers la face frontale (40) et venant en contact avec la surface à action catalytique pour la conversion chimique dudit au moins un composant, la direction normale (42) à la face frontale (40) du substrat (30) étant orientée suivant un angle différent de zéro par rapport à la direction d'étendue (44) de la partie de la conduite de fluide (28),
**caractérisé en ce que**
la conduite de fluide (28) est sensiblement en forme de U,
une région se raccordant en aval de la partie de la conduite de fluide (28) dans laquelle le substrat (30) est disposé et après une première courbure, région dans laquelle un agent de réduction peut être introduit dans la conduite de fluide (28) au moyen d'un dispositif d'injection (32), et
une partie de la conduite de fluide (28) dans laquelle un filtre à particules (34) doté d'une surface catalytique pour la réduction d'oxydes d'azote est disposé se situant en aval d'une autre courbure de la conduite de fluide (28), et un capteur d'oxyde d'azote (48) étant disposé en amont du substrat (30) dans la conduite de fluide (28) .

2. Dispositif de conversion chimique catalytique d'au moins un composant d'un flux de gaz selon la revendication 1,
**caractérisé en ce que**
l'angle entre la direction normale (42) et la direction d'étendue (44) est inférieur ou égal à l'angle entre le sens d'afflux (38) et la direction d'étendue (44), la somme de l'angle entre le sens d'afflux (38) et la direction normale (42) et entre la direction normale (42) et la direction d'étendue (44) étant sensiblement égale à l'angle entre le sens d'afflux (38) et la direction d'étendue (44).

3. Dispositif de conversion chimique catalytique d'au moins un composant d'un flux de gaz selon la revendication 1,
**caractérisé en ce que**
la surface à action catalytique du substrat (30) est une surface d'oxydation catalytique.

4. Dispositif de conversion chimique catalytique d'au moins un composant d'un flux de gaz selon la revendication 1,
**caractérisé en ce**
**qu'**un contour d'enveloppe du substrat (30) est un cylindre circulaire oblique ou un cylindre circulaire coupé en biais au moins au niveau d'une face frontale.

5. Système d'échappement (16) pour un moteur à combustion interne (12),
**caractérisé par**
un dispositif de conversion chimique catalytique d'au moins un composant d'un flux de gaz selon la revendication 1.

6. Système d'échappement (16) pour un moteur à combustion interne (12) selon la revendication 5,
**caractérisé en ce**
**qu'**un capteur de température et/ou une sonde lambda est/sont disposé (e) (s) en amont du substrat (30) dans la conduite de fluide (28).

7. Moteur à combustion interne (12),
**caractérisé par**
un système d'échappement (16) selon la revendication 5.

8. Véhicule automobile (10),
**caractérisé par**
un moteur à combustion interne (12) selon la revendication 7.
